# EUROPEAN PATENT SPECIFICATION

(11) **EP 3 702 410 B1**
(45) Date of publication and mention of the grant of the patent: **19.01.2022**
(21) Application number: 19159942.2
(22) Date of filing: 28.02.2019
(51) Int. Cl.: C08L 71/12

(54) **WATER PIPE FOR MINING OPERATIONS**
WASSERLEITUNG FÜR BERGBAUOPERATIONEN
TUYAU D'EAU POUR DES OPÉRATIONS D'EXPLOITATION MINIÈRE

(43) Date of publication of application: 02.09.2020
(73) Proprietor: SHPP Global Technologies B.V., 4612 PX Bergen op Zoom (NL)
(72) Inventor: GAN, Haiyang, Pudong, Shanghai 201319 (CN)
(74) Representative: Lang, Johannes

(56) References cited:
- EP-A2- 2 132 267
- WO-A1-2019/016702

## Description

### BACKGROUND

In the mining industry, metal pipes are commonly used for the delivery of water. Metal pipes have the disadvantages of high weight, susceptibility to corrosion, and the potential to create sparks. As an alternative to metal pipes, pipes made from various plastics have been employed. All plastic pipes benefit from reduced weight, reduced corrosion, and reduced sparking relative to metal pipes. However, plastic pipes have other disadvantages. Pipes made from poly(vinyl chloride) (PVC) are relatively brittle, and can break on impact. Pipes made from high density polyethylene (HDPE) and polypropylene (PP) exhibit good toughness (low brittleness), but they can withstand only relatively low burst pressure and static pressure. Ultrahigh molecular weight polyethylene pipe are difficult to extrude. WO 2019/016702 A1 discloses a multilayer water pipe for mining operations that has an inner layer and an outer layer, wherein each layer has a specific composition. The inner layer comprises, in specific amounts, a poly(phenylene ether), a hydrogenated block copolymer of an alkenyl aromatic monomer and a conjugated diene, and an organophosphate ester flame retardant. The outer layer comprises, in specific amounts, a high density polyethylene, an antistatic agent, a flame retardant, and a flame retardant synergist.

There remains a need for a mining industry water pipe that exhibits an improved balance of impact strength, tensile strength, burst pressure resistance, static pressure resistance, and flame retardancy.

### SUMMARY

A water pipe for mining operations comprises a composition comprising: 60 to 85 weight percent, or 70 to 80 weight percent of a poly(phenylene ether); 8 to 18 weight percent, or 10 to 14 weight percent of a hydrogenated block copolymer of an alkenyl aromatic monomer and a conjugated diene; 5 to 15 weight percent, or 7 to 14 weight percent of an organophosphate ester, a phosphazene, or a combination thereof; and 2 to 10 weight percent, or 3 to 7 weight percent of a brominated polystyrene; wherein weight percent of each component is based on the total weight of the composition.

A method for the manufacture of the water pipe comprises: forming a composition by melt-mixing 60 to 85 weight percent of a poly(phenylene ether); 8 to 18 weight percent of a hydrogenated block copolymer of an alkenyl aromatic monomer and a conjugated diene; 5 to 15 weight percent of an organophosphate ester, a phosphazene, or a combination thereof; and 2 to 10 weight percent of a brominated polystyrene; wherein weight percent of each component is based on the total weight of the composition; and extruding the composition through an annular die to provide the water pipe comprising the composition.

The above described and other features are exemplified by the following detailed description.

### DETAILED DESCRIPTION

The present inventors have determined that an improved balance of impact strength, tensile strength, burst pressure resistance, static pressure resistance, and flame retardancy is provided by a water pipe having a specific composition.

Accordingly, an aspect of the present disclosure is a water pipe for mining operations. The water pipe has an outer diameter of 20 to 200 millimeters. Within this range, the outer diameter of the pipe can be 20 to 160 millimeters, specifically 40 to 140 millimeters, more specifically 60 to 120 millimeters. The water pipe has a wall thickness of 2 to 20 millimeters. Within this range, the wall thickness can be 2 to 15 millimeters, specifically 3 to 15 millimeters, more specifically 4 to 12 millimeters. The water pipe is typically annular in cross-section, but variations in cross-sectional shape are possible.

The water pipe comprises a composition, sometimes referred to herein as a poly(phenylene ether) composition. In some embodiments, the water pipe consists of a single layer of the composition. In other embodiments, the water pipe comprises a single layer of the composition and at least one additional layer on the outside or inside of the layer of the composition and in contact with it. For example, the water pipe can comprise an internal layer of the poly(phenylene ether) composition, and an external layer of a high-density polyethylene-based composition. As another example, the water pipe can comprise an internal layer of a metal-based (e.g., iron-based or steel-based) composition and an external layer of the poly(phenylene ether) composition.

The composition comprises a poly(phenylene ether). Poly(phenylene ether)s include those comprising repeating structural units having the formula 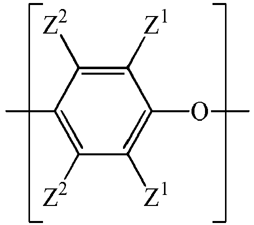 wherein each occurrence of Z¹ is independently halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; and each occurrence of Z² is independently hydrogen, halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms.

The poly(phenylene ether) can comprise molecules having aminoalkyl-containing end group(s), typically located in a position ortho to the hydroxy group. In some embodiments, Z¹ can be a di-n-butylaminomethyl group formed by reaction of a terminal 3,5-dimethyl-1,4-phenyl group with the di-n-butylamine component of an oxidative polymerization catalyst. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) can be in the form of a homopolymer, a copolymer, a graft copolymer, an ionomer, or a block copolymer, as well as combinations thereof.

In some embodiments, the poly(phenylene ether) comprises a poly(phenylene ether)-polysiloxane block copolymer. As used herein, the term "poly(phenylene ether)-polysiloxane block copolymer" refers to a block copolymer comprising at least one poly(phenylene ether) block and at least one polysiloxane block.

In some embodiments, the poly(phenylene ether)-polysiloxane block copolymer is prepared by an oxidative copolymerization method. In this method, the poly(phenylene ether)-polysiloxane block copolymer is the product of a process comprising oxidatively copolymerizing a monomer mixture comprising a monohydric phenol and a hydroxyaryl-terminated polysiloxane. In some embodiments, the monomer mixture comprises 70 to 99 parts by weight of the monohydric phenol and 1 to 30 parts by weight of the hydroxyaryl-terminated polysiloxane, based on the total weight of the monohydric phenol and the hydroxyaryl-terminated polysiloxane. The hydroxyaryl-diterminated polysiloxane can comprise a plurality of repeating units having the structure 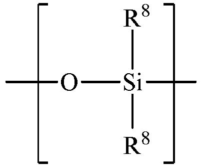 wherein each occurrence of R⁸ is independently hydrogen, C₁₋₁₂ hydrocarbyl or C₁₋₁₂ halohydrocarbyl; and two terminal units having the structure 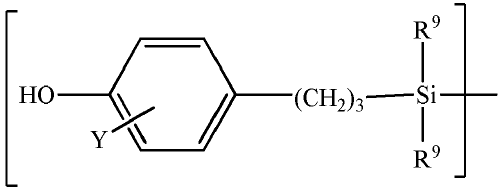 wherein Y is hydrogen, C₁₋₁₂ hydrocarbyl, C₁₋₁₂ hydrocarbyloxy, or halogen, and wherein each occurrence of R⁹ is independently hydrogen, C₁₋₁₂ hydrocarbyl or C₁₋₁₂ halohydrocarbyl. In a very specific embodiment, each occurrence of R⁸ and R⁹ is methyl, and Y is methoxy.

In some embodiments, the monohydric phenol comprises 2,6-dimethylphenol, and the hydroxyaryl-terminated polysiloxane has the structure 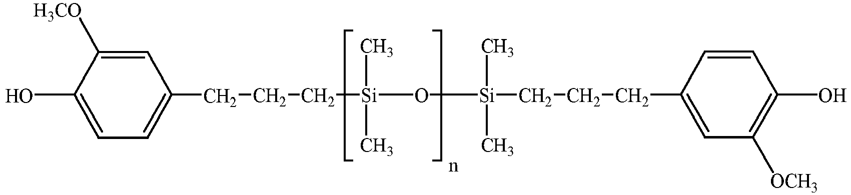 wherein n is, on average, 5 to 100, specifically 30 to 60.

The oxidative copolymerization method produces poly(phenylene ether)-polysiloxane block copolymer as the desired product and poly(phenylene ether) (without an incorporated polysiloxane block) as a by-product. It is not necessary to separate the poly(phenylene ether) from the poly(phenylene ether)-polysiloxane block copolymer. The poly(phenylene ether)-polysiloxane block copolymer can thus be utilized as a "reaction product" that includes both the poly(phenylene ether) and the poly(phenylene ether)-polysiloxane block copolymer. Certain isolation procedures, such as precipitation from isopropanol, make it possible to assure that the reaction product is essentially free of residual hydroxyaryl-terminated polysiloxane starting material. In other words, these isolation procedures assure that the polysiloxane content of the reaction product is essentially all in the form of poly(phenylene ether)-polysiloxane block copolymer. Detailed methods for forming poly(phenylene ether)-polysiloxane block copolymers are described in U.S. Patent Nos. 8,017,697 and 8,669,332 to Carrillo et al.

In some embodiments, the poly(phenylene ether) has an intrinsic viscosity of 0.25 to 1 deciliter per gram measured by Ubbelohde viscometer at 25°C in chloroform. Within this range, the poly(phenylene ether) intrinsic viscosity can be 0.3 to 0.65 deciliter per gram, more specifically 0.35 to 0.5 deciliter per gram, even more specifically 0.4 to 0.5 deciliter per gram.

In some embodiments, the poly(phenylene ether) comprises a homopolymer or copolymer of monomers selected from 2,6-dimethylphenol, 2,3,6-trimethylphenol, and combinations thereof. In some embodiments, the poly(phenylene ether) comprises a poly(2,6-dimethyl-1,4-phenylene ether) having an intrinsic viscosity of 0.4 to 0.5 deciliter per gram, determined by Ubbelohde viscometer at 25°C in chloroform.

In some embodiments, the poly(phenylene ether) comprises a poly(phenylene ether)-polysiloxane block copolymer. In these embodiments, the poly(phenylene ether)-polysiloxane block copolymer can, for example, contribute 0.05 to 2 weight percent, specifically 0.1 to 1 weight percent, more specifically 0.2 to 0.8 weight percent, of siloxane groups to the composition as a whole.

The composition comprises the poly(phenylene ether) in an amount of 60 to 85 weight percent, based on the total weight of the composition. Within this range, the composition can comprise the poly(phenylene ether) in an amount of 70 to 80 weight percent.

In addition to the poly(phenylene ether), the composition comprises a hydrogenated block copolymer of an alkenyl aromatic monomer and a conjugated diene. For brevity, this component is referred to as the "hydrogenated block copolymer". The hydrogenated block copolymer can comprise 10 to 90 weight percent of poly(alkenyl aromatic) content and 90 to 10 weight percent of hydrogenated poly(conjugated diene) content, based on the weight of the hydrogenated block copolymer. In some embodiments, the hydrogenated block copolymer is a low poly(alkenyl aromatic content) hydrogenated block copolymer in which the poly(alkenyl aromatic) content is 10 to less than 40 weight percent, specifically 20 to 35 weight percent, more specifically 25 to 35 weight percent, yet more specifically 30 to 35 weight percent, all based on the weight of the low poly(alkenyl aromatic) content hydrogenated block copolymer. In other embodiments, the hydrogenated block copolymer is a high poly(alkenyl aromatic content) hydrogenated block copolymer in which the poly(alkenyl aromatic) content is 40 to 90 weight percent, specifically 50 to 80 weight percent, more specifically 60 to 70 weight percent, all based on the weight of the high poly(alkenyl aromatic content) hydrogenated block copolymer.

In some embodiments, the hydrogenated block copolymer has a weight average molecular weight of 40,000 to 400,000 grams per mole (g/mole or daltons, Da). The number average molecular weight and the weight average molecular weight can be determined by gel permeation chromatography and based on comparison to polystyrene standards. In some embodiments, the hydrogenated block copolymer has a weight average molecular weight of 200,000 to 400,000 grams per mole, specifically 220,000 to 350,000 grams per mole. In other embodiments, the hydrogenated block copolymer has a weight average molecular weight of 40,000 to 200,000 grams per mole, specifically 40,000 to 180,000 grams per mole, more specifically 40,000 to 150,000 grams per mole.

The alkenyl aromatic monomer used to prepare the hydrogenated block copolymer can have the structure 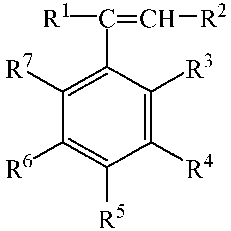 wherein R¹ and R² each independently represent a hydrogen atom, a C₁₋₈ alkyl group, or a C₂₋₈ alkenyl group; R³ and R⁷ each independently represent a hydrogen atom, a C₁₋₈ alkyl group, a chlorine atom, or a bromine atom; and R⁴, R⁵, and R⁶ each independently represent a hydrogen atom, a C₁₋₈ alkyl group, or a C₂₋₈ alkenyl group, or R⁴ and R⁵ are taken together with the central aromatic ring to form a naphthyl group, or R⁵ and R⁶ are taken together with the central aromatic ring to form a naphthyl group. Specific alkenyl aromatic monomers include, for example, styrene, chlorostyrenes such as p-chlorostyrene, methylstyrenes such as alpha-methyl styrene and p-methyl styrene, and t-butylstyrenes such as 3-t-butyl styrene and 4-t-butylstyrene. In some embodiments, the alkenyl aromatic monomer is styrene.

The conjugated diene used to prepare the hydrogenated block copolymer can be a C₄₋₂₀ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and the like, and combinations thereof. In some embodiments, the conjugated diene is 1,3-butadiene, 2-methyl-1,3-butadiene, or a combination thereof. In some embodiments, the conjugated diene is 1,3-butadiene.

The hydrogenated block copolymer is a copolymer comprising (A) at least one block derived from an alkenyl aromatic compound and (B) at least one block derived from a conjugated diene, in which the aliphatic unsaturated group content in the block (B) is at least partially reduced by hydrogenation. In some embodiments, the aliphatic unsaturation in the (B) block is reduced by at least 50 percent, specifically at least 70 percent. The arrangement of blocks (A) and (B) includes a linear structure, a grafted structure, and a radial teleblock structure with or without a branched chain. Linear block copolymers include tapered linear structures and non-tapered linear structures. In some embodiments, the hydrogenated block copolymer has a tapered linear structure. In some embodiments, the hydrogenated block copolymer has a non-tapered linear structure. In some embodiments, the hydrogenated block copolymer comprises a (B) block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of (A) and (B), wherein the molecular weight of each (A) block can be the same as or different from that of other (A) blocks, and the molecular weight of each (B) block can be the same as or different from that of other (B) blocks. In some embodiments, the hydrogenated block copolymer is a diblock copolymer, a triblock copolymer, or a combination thereof.

In some embodiments, the hydrogenated block copolymer excludes the residue of monomers other than the alkenyl aromatic compound and the conjugated diene. In some embodiments, the hydrogenated block copolymer consists of blocks derived from the alkenyl aromatic compound and the conjugated diene. It does not comprise grafts formed from these or any other monomers. It also consists of carbon and hydrogen atoms and therefore excludes heteroatoms. In some embodiments, the hydrogenated block copolymer includes the residue of one or more acid functionalizing agents, such as maleic anhydride. In some embodiments, the hydrogenated block copolymer comprises a polystyrene-poly(ethylene-butylene)-polystyrene triblock copolymer.

In some embodiments, the hydrogenated block copolymer is a polystyrene-poly(ethylene-butylene)-polystyrene triblock copolymer having a polystyrene content of 25 to 35 weight percent, based on the weight of the polystyrene-poly(ethylene-butylene)-polystyrene triblock copolymer. In these embodiments, the polystyrene-poly(ethylene-butylene)-polystyrene triblock copolymer can, optionally, have a weight average molecular weight of 240,000 to 300,000 grams per mole, determined by to size exclusion chromatography using polystyrene standards.

Methods for preparing hydrogenated block copolymers are known in the art and many hydrogenated block copolymers are commercially available. Illustrative commercially available hydrogenated block copolymers include the polystyrene-poly(ethylene-propylene) diblock copolymers available from Kraton Performance Polymers Inc. as KRATON^{™} G1701 (having about 37 weight percent polystyrene) and G1702 (having about 28 weight percent polystyrene); the polystyrene-poly(ethylene-butylene)-polystyrene triblock copolymers available from Kraton Performance Polymers Inc.as KRATON^{™} G1641 (having about 33 weight percent polystyrene), G1650 (having about 30 weight percent polystyrene), G1651 (having about 33 weight percent polystyrene), and G1654 (having about 31 weight percent polystyrene); and the polystyrene-poly(ethylene-ethylene/propylene)-polystyrene triblock copolymers available from Kuraray as SEPTON^{™} S4044, S4055, S4077, and S4099. Additional commercially available hydrogenated block copolymers include polystyrene-poly(ethylene-butylene)-polystyrene (SEBS) triblock copolymers available from Dynasol as CALPRENE^{™} H6140 (having about 31 weight percent polystyrene), H6170 (having about 33 weight percent polystyrene), H6171 (having about 33 weight percent polystyrene), and H6174 (having about 33 weight percent polystyrene); and from Kuraray as SEPTON^{™} 8006 (having about 33 weight percent polystyrene) and 8007 (having about 30 weight percent polystyrene); polystyrene-poly(ethylenepropylene)-polystyrene (SEPS) copolymers available from Kuraray as SEPTON^{™} 2006 (having about 35 weight percent polystyrene) and 2007 (having about 30 weight percent polystyrene); and oil-extended compounds of these hydrogenated block copolymers available from Kraton Performance Polymers Inc.as KRATON^{™} G4609 (containing about 45% mineral oil, and the SEBS having about 33 weight percent polystyrene) and G4610 (containing about 31% mineral oil, and the SEBS having about 33 weight percent polystyrene); and from Asahi as TUFTEC^{™} H1272 (containing about 36% oil, and the SEBS having about 35 weight percent polystyrene). Mixtures of two of more hydrogenated block copolymers can be used. In some embodiments, the hydrogenated block copolymer comprises a polystyrene poly(ethylene-butylene)-polystyrene triblock copolymer having a weight average molecular weight of at least 100,000 grams per mole, specifically 200,000 to 400,000 grams per mole.

The composition comprises a hydrogenated block copolymer in an amount of 8 to 18 weight percent, based on the total weight of the composition. Within this range, the amount of the hydrogenated block copolymer can be 10 to 14 weight percent.

In addition to the poly(phenylene ether) and the hydrogenated block copolymer, the composition further comprises an organophosphate ester, a phosphazene, or a combination thereof.

In an embodiment, the composition comprises the organophosphate ester. Exemplary organophosphate ester flame retardants include phosphate esters comprising phenyl groups, substituted phenyl groups, or a combination of phenyl groups and substituted phenyl groups, bis-aryl phosphate esters based upon resorcinol such as, for example, resorcinol bis(diphenyl phosphate), as well as those based upon bisphenols such as, for example, bisphenol A bis(diphenyl phosphate). In some embodiments, the organophosphate ester is selected from tris(alkylphenyl) phosphates (for example, CAS Reg. No. 89492-23-9 or CAS Reg. No. 78-33-1), resorcinol bis(diphenyl phosphate) (CAS Reg. No. 57583-54-7), bisphenol A bis(diphenyl phosphate) (CAS Reg. No. 181028-79-5), triphenyl phosphate (CAS Reg. No. 115-86-6), tris(isopropylphenyl) phosphates (for example, CAS Reg. No. 68937-41-7), t-butylphenyl diphenyl phosphates (CAS Reg. No. 56803-37-3), bis(t-butylphenyl) phenyl phosphates (CAS Reg. No. 65652-41-7), tris(t-butylphenyl) phosphates (CAS Reg. No. 78-33-1), and combinations thereof.

In some embodiments the organophosphate ester comprises a bis-aryl phosphate having the formula 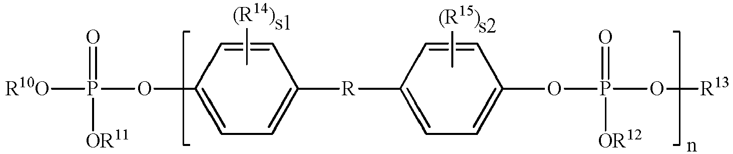 wherein R is independently at each occurrence a C₁₋₁₂ alkylene group; R¹⁴ and R¹⁵ are independently at each occurrence a C₁₋₅ alkyl group; R¹⁰, R¹¹, and R¹³ are independently a C₁₋₁₂ hydrocarbyl group; R¹² is independently at each occurrence a C₁₋₁₂ hydrocarbyl group; n is 1 to 25; and s1 and s2 are independently an integer equal to 0, 1, or 2. In some embodiments OR¹⁰, OR¹¹, OR¹², and OR¹³ are independently derived from phenol, a monoalkylphenol, a dialkylphenol, or a trialkylphenol.

As readily appreciated by one of ordinary skill in the art, the bis-aryl phosphate is derived from a bisphenol. Exemplary bisphenols include 2,2-bis(4-hydroxyphenyl)propane (bisphenol A), 2,2-bis(4-hydroxy-3-methylphenyl)propane, bis(4-hydroxyphenyl)methane, bis(4-hydroxy-3,5-dimethylphenyl)methane and 1,1-bis(4-hydroxyphenyl)ethane. In some embodiments, the bisphenol comprises bisphenol A. In some embodiments, the flame retardant consists of the organophosphate ester.

In an embodiment, the composition comprises the phosphazene. The phosphazene can be a linear or cyclic bis(phenoxy)phosphazene. In some embodiments, the flame retardant consists of the phosphazene.

The organophosphate ester, the phosphazene, or their combination can be present in the composition in an amount of 5 to 15 weight percent based on the total weight of the composition. Within this range, the amount of the organophosphate ester, the phosphazene, or their combination can be 7 to 14 weight percent.

The composition further comprises a brominated polystyrene. The brominated polystyrene can be present in an amount of 2 to 10 weight percent, based on the total weight of the composition. Within this range, the brominated polystyrene can be present in an amount of 3 to 7 weight percent.

In an embodiment, the composition can optionally further comprise an anti-drip agent. The anti-drip agent can preferably comprise a poly(styrene-acrylonitrile)-encapsulated polytetrafluoroethylene. When present, the anti-drip agent can be included in an amount of 0.1 to 5 weight percent.

In some embodiments, the composition can optionally further comprise an additive composition. The additive composition can comprise one of more of stabilizers, lubricants, processing aids, UV blockers, dyes, pigments, antioxidants, anti-static agents, mineral oil, and metal deactivators. When present, the additive composition can be included in an amount of 0.1 to 10 weight percent, based on the total weight of the composition.

Components not described herein a required can be minimized or excluded. For example, in some embodiments, the composition comprises 0 to 2 weight percent of polyamides, and in some embodiments the composition excludes polyamides. As another example, in some embodiments, the composition comprises 0 to 2 weight percent of polyolefins, and in some embodiments the composition excludes polyolefins. As another example, in some embodiments, the composition comprises 0 to 2 weight percent of polyesters, and in some embodiments the composition excludes polyesters. As another example, in some embodiments the composition comprises 0 to 2 weight percent of unhydrogenated block copolymers of alkenyl aromatic monomers and conjugated dienes, and in some embodiment the composition excludes such unhydrogenated block copolymers.

In a specific embodiment, the composition comprises, or consists of, 70 to 80 weight percent of the poly(phenylene ether); 10 to 14 weight percent of the hydrogenated block copolymer of an alkenyl aromatic monomer and a conjugated diene; 6 to 12 weight percent of the organophosphate ester; 3 to 7 weight percent of the brominated polystyrene; 0 to 1 weight percent of a poly(styrene-acrylonitrile)-encapsulated polytetrafluoroethylene; and 0 to 5 weight percent of a stabilizer, lubricant, processing aid, UV blocker, dye, pigment, antioxidant, anti-static agent, mineral oil, and metal deactivator. In this embodiment, the the poly(phenylene ether) comprises a poly(2,6-dimethyl-1,4-phenylene ether) having an intrinsic viscosity of 0.4 to 0.5 deciliter per gram, determined by Ubbelohde viscometer at 25°C in chloroform; the hydrogenated block copolymer is a polystyrene-poly(ethylene-butylene)-polystyrene triblock copolymer having a polystyrene content of 25 to 35 weight percent, based on the weight of the polystyrene-poly(ethylene-butylene)-polystyrene triblock copolymer, and wherein the polystyrene-poly(ethylene-butylene)-polystyrene triblock copolymer has a weight average molecular weight of 240,000 to 300,000 grams per mole, determined according to size exclusion chromatography using polystyrene standards; and the organophosphate ester comprises bisphenol A bis(diphenyl phosphate).

In another specific embodiment, the composition comprises, or consists of, 70 to 80 weight percent of the poly(phenylene ether); 10 to 14 weight percent of the hydrogenated block copolymer of an alkenyl aromatic monomer and a conjugated diene; 6 to 10 weight percent of the phosphazene; 3 to 7 weight percent of the brominated polystyrene; 0 to 1 weight percent of a poly(styrene-acrylonitrile) encapsulated polytetrafluoroethylene; and 0 to 5 weight percent of a stabilizer, lubricant, processing aid, UV blocker, dye, pigment, antioxidant, anti-static agent, mineral oil, and metal deactivator. In this embodiment, the poly(phenylene ether) comprises a poly(2,6-dimethyl-1,4-phenylene ether) having an intrinsic viscosity of 0.4 to 0.5 deciliter per gram, determined by Ubbelohde viscometer at 25°C in chloroform; the hydrogenated block copolymer is a polystyrene-poly(ethylene-butylene)-polystyrene triblock copolymer having a polystyrene content of 25 to 35 weight percent, based on the weight of the polystyrene-poly(ethylene-butylene)-polystyrene triblock copolymer, and wherein the polystyrene-poly(ethylene-butylene)-polystyrene triblock copolymer has a weight average molecular weight of 240,000 to 300,000 grams per mole, determined according to size exclusion chromatography using polystyrene standards; and the phosphazene comprises a bis(phenoxy)phosphazene.

The composition can be prepared by melt-blending or melt-kneading the components of the composition. The melt-blending or melt-kneading can be performed using common equipment such as ribbon blenders, HENSCHEL mixers, BANBURY mixers, drum tumblers, single-screw extruders, twin-screw extruders, multi-screw extruders, co-kneaders, and the like. For example, the present composition can be prepared by melt-blending the components in a twin-screw extruder at a temperature of 270 to 310 °C, specifically 280 to 300 °C.

The water pipe can be prepared by extruding the molten composition through an annular die. Pipe extrusion can accompany compounding of the composition, or it can be a separate step following intermediate pelletization of the composition. Pipe extrusion can be conducted at a melt temperature 240 to 300 °C, specifically 240 to 280 °C.

This disclosure is further illustrated by the following examples, which are nonlimiting.

### EXAMPLES

Materials used for the following Examples are described in Table 1.

**Table 1**

| Component | Description |
|---|---|
| PPE | Poly(2,6-dimethyl-1,4-phenylene ether), CAS Reg. No. 24938-67-8, having an intrinsic viscosity of about 0.46 deciliter per gram as measured in chloroform at 25°C; obtained as PPO 646 from SABIC. |
| SEBS | Polystyrene-poly(ethylene-butylene)-polystyrene triblock copolymer, CAS Reg. No. 66070-58-4, having a polystyrene content of about 30-33 weight percent, essentially no melt flow measured according to ASTM D 1238-13 at 230 °C and 5 kilogram load, and a weight average molecular weight of about 240,000-300,000 grams per mole; obtained as KRATON^{™} G1651 from Kraton Performance Polymers Inc. |
| BPADP | Bisphenol A bis(diphenyl phosphate), CAS Reg. No. 5945-33-5; obtained as CR-741 from Daihachi Chemical Industry Co., Ltd. |
| Phosphazene | Bis(phenoxy)phosphazene oligomer, CAS Reg. No. 260408-02-4; obtained as SPB-100 from Otsuka Chemical Co. Ltd |
| TPP | Triphenyl phosphate, CAS Reg. No. 115-86-6, obtained as TPP from DAIHACHI CHEMICAL INDUSTRY CO., LTD |
| Br-PS | Brominated polystyrene, CAS Reg. No. 88497-56-7, obtained as SAYTEX HP-7010 from Albermale |
| TSAN | Poly(styrene-acrylonitrile)-encapsulated poly(tetrafluoroethylene), containing 50 weight percent polytetrafluoroethylene, obtained as CYCLOLAC^{™} INP449 from SABIC |
| MgO | Magnesium oxide, CAS Reg. No. 1309-48-4, obtained as KYOWAMAG^{™} 150 from Kyowa Chemical Industry Co., Ltd. |
| ZnS | Zinc sulfide, CAS Reg. No. 1314-98-3; obtained as SACHTOLITH^{™} HD from Sachtleben Corp. |
| AO 168 | Tris(2,4-di-tert-butylphenyl) phosphite, CAS Reg. No. 31570-04-4; obtained as IRGAFOS^{™} 168 from BASF. |

The compositions of the following examples were compounded on a Toshiba TEM-37BS twin screw extruder. All components were added at the feed throat of the extruded, exception for BPADP which was added through a liquid feeder. The extrudate was cooled in a water bath and pelletized. Pellets were conditioned at 120°C for 3 hours prior to injection molding or extrusion molding.

Tensile strength at yield values, expressed in units of megapascals, and tensile elongation at break values, expressed in units of percent, were determined according to ASTM D 638-14 at 23 °C using a Type I bar, a gage length of 50 millimeters, and a test speed of 50 millimeters/minute. A tensile strength value of at least 50 megapascals is desirable. Notched Izod impact (NII) strength values, expressed in units of joules/meter, were determined according to ASTM D 256-10 Method A at 23 °C using bar cross-sectional dimensions of 3.2 millimeters by 12.7 millimeters. The notched Izod impact strength value is desirably at least 350 joules/meter, specifically at least 400 joules/meter.

Flexural modulus and flexural stress at yield values, each expressed in units of megapascals, were determined according to ASTM D 790-10 at 23 °C using a bar with cross-sectional dimensions of 3.2 millimeters by 12.7 millimeters, a support span of 50.8 millimeters, and a test speed of 2.54 millimeters/minute. Flexural strength values are desirably at least 80 megapascals.

Melt flow rate values, expressed in units of grams per 10 minutes, were determined according to ASTM D 1238-10, Procedure B, at a temperature of 280 °C and a 10 kilogram load. Heat deflection temperature (HDT) was determined at 1.8 MPa using a bar having a thickness of 3.2 millimeters.

Flame-out time (FOT) values, expressed in units of seconds, were determined according to MT-181 using 6 millimeter plaques. The plaques were exposed to a 960°C flame for 30 seconds on the edge. The time for the flame to extinguish was measured. Each sample was tested five times. FOT is desirably less than 6 seconds, preferably less than 3 seconds.

Compositions and material properties are summarized in Table 2, where component amounts are expressed in weight percent based on the total weight of the composition.

**Table 2**

| **Component** | **Unit** | **CE1** | **CE2** | **CE3** | **CE4** | **CE5** | **E1** | **E2** | **E3** | **E4** |
|---|---|---|---|---|---|---|---|---|---|---|
| PPE | % | 74.7 | 74.7 | 74.7 | 74.7 | 74.2 | 74.7 | 74.2 | 74.2 | 74.2 |
| SEBS | % | 11.95 | 10.4 | 11.95 | 11.9 | 11.9 | 11.95 | 11.9 | 11.9 | 11.9 |
| BPADP | % | 12.95 | 14.5 | | | 13 | 7.95 | 8 | 10 | |
| TPP | % | | | 12.95 | | | | | | |
| Phosphazene | % | | | | 13 | | | | | 8 |
| Br-PS | % | | | | | | 5 | 5 | 3 | 5 |
| TSAN | % | | | | | 0.5 | | 0.5 | 0.5 | 0.5 |
| ZnS | % | 0.15 | 0.15 | 0.15 | 0.15 | 0.15 | 0.15 | 0.15 | 0.15 | 0.15 |
| MgO | % | 0.15 | 0.15 | 0.15 | 0.15 | 0.15 | 0.15 | 0.15 | 0.15 | 0.15 |
| AO 168 | % | 0.1 | 0.1 | 0.1 | 0.1 | 0.1 | 0.1 | 0.1 | 0.1 | 0.1 |
| **Properties** | | | | | | | | | | |
| MFR | g/10 min | 13 | 16.2 | 19.7 | 14.2 | 9.3 | 4.7 | 7.6 | 10.9 | 6.7 |
| Tens. Strength at yield | MPa | 60 | 61.4 | 49.1 | 52 | 60.2 | 63.6 | 59.6 | 58.4 | 54.4 |
| Tens. Elong. At break | % | 10.5 | 11.2 | 26.9 | 22.5 | 10.3 | 12.1 | 9.6 | 10.8 | 22.5 |
| Flex. Mod. | MPa | 2230 | 2300 | 1980 | 1920 | 2350 | 2360 | 2280 | 2270 | 2010 |
| Flex. Strength at yield | MPa | 96.8 | 99.1 | 77.8 | 80.5 | 99.4 | 101 | 96.4 | 95.3 | 83.7 |
| NII | J/m | 529 | 454 | 662 | 623 | 480 | 428 | 444 | 491 | 538 |
| HDT | °C | 120.7 | 116.8 | 105.1 | 126.6 | 119 | 138 | 134.9 | 125.7 | 143 |
| FOT | Sec | 5.5 | 4 | 5.7 | 9.1 | 4.4 | 3.33 | 2.5 | 2.1 | 1.2 |
| FOT >6s | - | 3 | 1 | 2 | 3 | 1 | 0 | 0 | 0 | 0 |

As shown in Table 1, CE1 displayed a FOT of 5.5 seconds, and 3 plaques (of the five samples tested) exhibited FOT of greater than 6 seconds. Increasing the BPADP loading to 14.5% in CE2 led to an average FOT of 4 seconds with 1/5 plaques exhibiting a FOT of greater than 6 seconds. Additionally, the NII of CE2 was observed to decrease significantly (from 529 to 454 J/m). Using other flame retardants such as TPP and phosphazene did not provide an obvious impact in the FOT, as shown in CE3 and CE4. CE5 includes the anti-drip agent TSAN, which led to some improvement in the flame retardant properties, but was also accompanied by a decrease in NII.

In contrast, E1 achieved an average FOT of 3.33 seconds, with none of the five plaques burning longer than 6 seconds. Inclusion of the anti-drip agent as well as replacement of some of the BPADP with Br-PS in E2 and E3 showed average FOT of less than 3 seconds, also with none of the plaques burning longer than 6 seconds.

This disclosure further encompasses the following aspects.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. The term "combination thereof' as used herein includes one or more of the listed elements, and is open, allowing the presence of one or more like elements not named. In addition, it is to be understood that the described elements may be combined in any suitable manner in the various embodiments.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂₋aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example - CH₂CH₂CN is a C₂ alkyl group substituted with a nitrile.

## Claims

1. A water pipe for mining operations, wherein the water pipe comprises a composition comprising:
60 to 85 weight percent, or 70 to 80 weight percent of a poly(phenylene ether);
8 to 18 weight percent, or 10 to 14 weight percent of a hydrogenated block copolymer of an alkenyl aromatic monomer and a conjugated diene;
5 to 15 weight percent, or 7 to 14 weight percent of an organophosphate ester, a phosphazene, or a combination thereof; and
2 to 10 weight percent, or 3 to 7 weight percent of a brominated polystyrene;
wherein weight percent of each component is based on the total weight of the composition.

2. The water pipe of claim 1, wherein the water pipe has an outer diameter of 20 to 200 millimeters and a wall thickness of 2 to 20 millimeters.

3. The water pipe of claim 1 or 2, wherein the water pipe consists of the composition.

4. The water pipe of any of claims 1 to 3, wherein the poly(phenylene ether) comprises a poly(2,6-dimethyl-1,4-phenylene ether) having an intrinsic viscosity of 0.4 to 0.5 deciliter per gram, determined by Ubbelohde viscometer at 25°C in chloroform.

5. The water pipe of any of claims 1 to 4, wherein the hydrogenated block copolymer is a polystyrene-poly(ethylene-butylene)-polystyrene triblock copolymer having a polystyrene content of 25 to 35 weight percent, based on the weight of the polystyrene-poly(ethylenebutylene)-polystyrene triblock copolymer.

6. The water pipe of any of claims 1 to 5, wherein the composition comprises the organophosphate ester, preferably wherein the organophosphate ester is bisphenol A bis(diphenyl phosphate).

7. The water pipe of any of claims 1 to 6, wherein the composition comprises the phosphazene, preferably wherein the phosphazene comprises a bis(phenoxy)phosphazene.

8. The water pipe of any of claims 1 to 7, wherein the composition further comprises 0.1 to 5 weight percent of an anti-drip agent, preferably poly(styrene-acrylonitrile)-encapsulated polytetrafluoroethylene.

9. The water pipe of any of claims 1 to 8, wherein the composition further comprises 0.1 to 10 weight percent of an additive composition, wherein the additive composition comprises one of more of stabilizers, lubricants, processing aids, UV blockers, dyes, pigments, antioxidants, anti-static agents, mineral oil, and metal deactivators.

10. The water pipe of claim 1, wherein the composition consists of:
70 to 80 weight percent of the poly(phenylene ether);
10 to 14 weight percent of the hydrogenated block copolymer of an alkenyl aromatic monomer and a conjugated diene;
6 to 12 weight percent of the organophosphate ester;
3 to 7 weight percent of the brominated polystyrene;
0 to 1 weight percent of a poly(styrene-acrylonitrile)-encapsulated polytetrafluoroethylene; and
0 to 5 weight percent of a stabilizer, lubricant, processing aid, UV blocker, dye, pigment, antioxidant, anti-static agent, mineral oil, and metal deactivator.

11. The water pipe of claim 10, wherein
the poly(phenylene ether) comprises a poly(2,6-dimethyl-1,4-phenylene ether) having an intrinsic viscosity of 0.4 to 0.5 deciliter per gram, determined by Ubbelohde viscometer at 25°C in chloroform;
the hydrogenated block copolymer is a polystyrene-poly(ethylene-butylene)-polystyrene triblock copolymer having a polystyrene content of 25 to 35 weight percent, based on the weight of the polystyrene-poly(ethylene-butylene)-polystyrene triblock copolymer, and wherein the polystyrene-poly(ethylene-butylene)-polystyrene triblock copolymer has a weight average molecular weight of 240,000 to 300,000 grams per mole, determined according to size exclusion chromatography using polystyrene standards; and
the organophosphate ester comprises bisphenol A bis(diphenyl phosphate).

12. The water pipe of claim 1, wherein the composition consists of:
70 to 80 weight percent of the poly(phenylene ether);
10 to 14 weight percent of the hydrogenated block copolymer of an alkenyl aromatic monomer and a conjugated diene;
6 to 10 weight percent of the phosphazene;
3 to 7 weight percent of the brominated polystyrene;
0 to 1 weight percent of a poly(styrene-acrylonitrile) encapsulated polytetrafluoroethylene; and
0 to 5 weight percent of a stabilizer, lubricant, processing aid, UV blocker, dye, pigment, antioxidant, anti-static agent, mineral oil, and metal deactivator.

13. The water pipe of claim 12, wherein
the poly(phenylene ether) comprises a poly(2,6-dimethyl-1,4-phenylene ether) having an intrinsic viscosity of 0.4 to 0.5 deciliter per gram, determined by Ubbelohde viscometer at 25°C in chloroform;
the hydrogenated block copolymer is a polystyrene-poly(ethylene-butylene)-polystyrene triblock copolymer having a polystyrene content of 25 to 35 weight percent, based on the weight of the polystyrene-poly(ethylene-butylene)-polystyrene triblock copolymer, and wherein the polystyrene-poly(ethylene-butylene)-polystyrene triblock copolymer has a weight average molecular weight of 240,000 to 300,000 grams per mole, determined according to size exclusion chromatography using polystyrene standards; and
the phosphazene comprises a bis(phenoxy)phosphazene.

14. A method for the manufacture of the water pipe of any of claims 1 to 13, the method comprising:
forming a composition by melt-mixing
60 to 85 weight percent of a poly(phenylene ether);
8 to 18 weight percent of a hydrogenated block copolymer of an alkenyl aromatic monomer and a conjugated diene;
5 to 15 weight percent of an organophosphate ester, a phosphazene, or a combination thereof; and
2 to 10 weight percent of a brominated polystyrene;
wherein weight percent of each component is based on the total weight of the composition; and
extruding the composition through an annular die to provide the water pipe comprising the composition.

## Patentansprüche

1. Wasserleitung für Bergbauoperationen, wobei die Wasserleitung eine Zusammensetzung umfasst, umfassend:
60 bis 85 Gewichtsprozent oder 70 bis 80 Gewichtsprozent eines Poly(phenylenethers);
8 bis 18 Gewichtsprozent oder 10 bis 14 Gewichtsprozent eines hydrierten Blockcopolymers eines alkenylaromatischen Monomers und eines konjugierten Diens;
5 bis 15 Gewichtsprozent oder 7 bis 14 Gewichtsprozent eines Organophosphatesters, eines Phosphazens oder einer Kombination davon; und
2 bis 10 Gewichtsprozent oder 3 bis 7 Gewichtsprozent eines bromierten Polystyrols;
wobei Gewichtsprozent jeder Komponente auf das Gesamtgewicht der Zusammensetzung bezogen ist.

2. Wasserleitung nach Anspruch 1, wobei die Wasserleitung einen Außendurchmesser von 20 bis 200 Millimeter und eine Wandstärke von 2 bis 20 Millimeter aufweist.

3. Wasserleitung nach Anspruch 1 oder 2, wobei die Wasserleitung aus der Zusammensetzung besteht.

4. Wasserleitung nach irgendeinem der Ansprüche 1 bis 3, wobei der Poly(phenylenether) einen Poly(2,6-dimethyl-1,4-phenylenether) mit einer intrinsischen Viskosität bzw. Grenzviskosität von 0,4 bis 0,5 Deziliter pro Gramm, bestimmt durch ein Ubbelohde-Viskosimeter bei 25°C in Chloroform, umfasst.

5. Wasserleitung nach irgendeinem der Ansprüche 1 bis 4, wobei das hydrierte Blockcopolymer ein Polystyrol-Poly(ethylen-butylen)-Polystyrol-Triblockcopolymer mit einem Polystyrolgehalt von 25 bis 35 Gewichtsprozent, bezogen auf das Gewicht des Polystyrol-Poly(ethylen-butylen)-Polystyrol-Triblockcopolymers, ist.

6. Wasserleitung nach irgendeinem der Ansprüche 1 bis 5, wobei die Zusammensetzung den Organophosphatester umfasst, vorzugsweise wobei der Organophosphatester Bisphenol A-Bis(diphenylphosphat) ist.

7. Wasserleitung nach irgendeinem der Ansprüche 1 bis 6, wobei die Zusammensetzung das Phosphazen umfasst, vorzugsweise wobei das Phosphazen ein Bis(phenoxy)phosphazen umfasst.

8. Wasserleitung nach irgendeinem der Ansprüche 1 bis 7, wobei die Zusammensetzung ferner 0,1 bis 5 Gewichtsprozent eines Antitropfmittels, vorzugsweise Poly(styrol-acrylnitril)-eingekapseltes Polytetrafluorethylen, umfasst.

9. Wasserleitung nach irgendeinem der Ansprüche 1 bis 8, wobei die Zusammensetzung weiterhin 0,1 bis 10 Gewichtsprozent einer Additivzusammensetzung umfasst, wobei die Additivzusammensetzung eines oder mehrere von Stabilisatoren, Gleitmitteln bzw. Schmiermitteln, Verarbeitungshilfsstoffen, UV-Blockern, Farbstoffen, Pigmenten, Antioxidantien, Antistatikmitteln, Mineralöl und Metalldesaktivatoren umfasst.

10. Wasserleitung nach Anspruch 1, wobei die Zusammensetzung besteht aus:
70 bis 80 Gewichtsprozent des Poly(phenylenethers);
10 bis 14 Gewichtsprozent des hydrierten Blockcopolymers eines alkenylaromatischen Monomers und eines konjugierten Diens;
6 bis 12 Gewichtsprozent des Organophosphatesters;
3 bis 7 Gewichtsprozent des bromierten Polystyrols;
0 bis 1 Gewichtsprozent eines Poly(styrol-acrylnitril)-eingekapselten Polytetrafluorethylens; und
0 bis 5 Gewichtsprozent eines Stabilisators, Gleitmittels bzw. Schmiermittels, Verarbeitungshilfsstoffs, UV-Blockers, Farbstoffs, Pigments, Antioxidans, Antistatikums, Mineralöls und Metalldesaktivators.

11. Wasserleitung nach Anspruch 10, wobei der Poly(phenylenether) einen Poly(2,6-dimethyl-1,4-phenylenether) mit einer intrinsischen Viskosität bzw. Grenzviskosität von 0,4 bis 0,5 Deziliter pro Gramm umfasst, bestimmt durch ein Ubbelohde-Viskosimeter bei 25°C in Chloroform; das hydrierte Blockcopolymer ein Polystyrol-Poly(ethylen-butylen)-Polystyrol-Triblockcopolymer mit einem Polystyrolgehalt von 25 bis 35 Gewichtsprozent, bezogen auf das Gewicht des Polystyrol-Poly(ethylen-butylen)-Polystyrol-Triblockcopolymers, ist, und wobei das Polystyrol-Poly(ethylen-butylen)-Polystyrol-Triblockcopolymer ein gewichtsgemitteltes Molekulargewicht von 240.000 bis 300.000 Gramm pro Mol hat, bestimmt gemäß Größenausschlusschromatographie unter Verwendung von Polystyrolstandards; und der Organophosphatester Bisphenol A-Bis(diphenylphosphat) umfasst.

12. Wasserleitung nach Anspruch 1, wobei die Zusammensetzung besteht aus:
70 bis 80 Gewichtsprozent des Poly(phenylenethers);
10 bis 14 Gewichtsprozent des hydrierten Blockcopolymers eines alkenylaromatischen Monomers und eines konjugierten Diens;
6 bis 10 Gewichtsprozent des Phosphazens;
3 bis 7 Gewichtsprozent des bromierten Polystyrols;
0 bis 1 Gewichtsprozent eines Poly(styrol-acrylnitril)-eingekapselten Polytetrafluorethylens; und
0 bis 5 Gewichtsprozent eines Stabilisators, Gleitmittels bzw. Schmiermittels, Verarbeitungshilfsstoffs, UV-Blockers, Farbstoffs, Pigments, Antioxidans, Antistatikums, Mineralöls und Metalldesaktivators.

13. Wasserleitung nach Anspruch 12, wobei der Poly(phenylenether) einen Poly(2,6-dimethyl-1,4-phenylenether) mit einer intrinsischen Viskosität bzw. Grenzviskosität von 0,4 bis 0,5 Deziliter pro Gramm umfasst, bestimmt durch ein Ubbelohde-Viskosimeter bei 25°C in Chloroform; das hydrierte Blockcopolymer ein Polystyrol-Poly(ethylen-butylen)-Polystyrol-Triblockcopolymer mit einem Polystyrolgehalt von 25 bis 35 Gewichtsprozent, bezogen auf das Gewicht des Polystyrol-Poly(ethylen-butylen)-Polystyrol-Triblockcopolymers, ist, und wobei das Polystyrol-Poly(ethylen-butylen)-Polystyrol-Triblockcopolymer ein gewichtsgemitteltes Molekulargewicht von 240.000 bis 300.000 Gramm pro Mol hat, bestimmt gemäß Größenausschlusschromatographie unter Verwendung von Polystyrolstandards; und das Phosphazen ein Bis(phenoxy)phosphazen umfasst.

14. Verfahren zur Herstellung der Wasserleitung nach irgendeinem der Ansprüche 1 bis 13, wobei das Verfahren umfasst:
Bilden einer Zusammensetzung durch Schmelzmischen von 60 bis 85 Gewichtsprozent eines Poly(phenylenethers);
8 bis 18 Gewichtsprozent eines hydrierten Blockcopolymers eines alkenylaromatischen Monomers und eines konjugierten Diens;
5 bis 15 Gewichtsprozent eines Organophosphatesters, eines Phosphazens oder einer Kombination davon; und
2 bis 10 Gewichtsprozent eines bromierten Polystyrols;
wobei Gewichtsprozent jeder Komponente auf das Gesamtgewicht der Zusammensetzung bezogen ist; und
Extrudieren der Zusammensetzung durch eine ringförmige Düse, um die Wasserleitung bereitzustellen, die die Zusammensetzung umfasst.

## Revendications

1. Tuyau d'eau pour opérations d'exploitation minière, le tuyau d'eau comprenant une composition comprenant :
60 à 85 pour cent en poids, ou 70 à 80 pour cent en poids d'un poly(phénylène éther) ;
8 à 18 pour cent en poids, ou 10 à 14 pour cent en poids d'un copolymère à blocs hydrogénés d'un monomère alcénylaromatique et d'un diène conjugué ;
5 à 15 pour cent en poids, ou 7 à 14 pour cent en poids d'un ester organophosphate, d'un phosphazène ou d'une combinaison de ceux-ci ; et
2 à 10 pour cent en poids, ou 3 à 7 pour cent en poids d'un polystyrène bromé ;
dans lequel le pourcentage en poids de chaque composant est rapporté au poids total de la composition.

2. Tuyau d'eau selon la revendication 1, le tuyau d'eau ayant un diamètre extérieur de 20 à 200 millimètres et une épaisseur de paroi de 2 à 20 millimètres.

3. Tuyau d'eau selon la revendication 1 ou 2, le tuyau d'eau étant constitué de la composition.

4. Tuyau d'eau selon l'une des revendications 1 à 3, dans lequel le poly(phénylène éther) comprend un poly(2,6-diméthyl-1,4-phénylène éther) ayant une viscosité intrinsèque de 0,4 à 0,5 décilitre par gramme, déterminée à l'aide d'un viscosimètre Ubbelohde à 25 °C dans le chloroforme.

5. Tuyau d'eau selon l'une des revendications 1 à 4, dans lequel le copolymère à blocs hydrogénés est un copolymère tribloc polystyrène-poly(éthylène-butylène)-polystyrène ayant une teneur en polystyrène de 25 à 35 pour cent en poids par rapport au poids du copolymère tribloc polystyrène-poly(éthylène-butylène)-polystyrène.

6. Tuyau d'eau selon l'une des revendications 1 à 5, dans lequel la composition comprend l'ester organophosphate, de préférence dans lequel l'ester organophosphate est le bis(diphénylphosphate) du bisphénol A.

7. Tuyau d'eau selon l'une des revendications 1 à 6, dans lequel la composition comprend le phosphazène, de préférence dans lequel le phosphazène comprend un bis(phénoxy)phosphazène.

8. Tuyau d'eau selon l'une des revendications 1 à 7, dans lequel la composition comprend en outre 0,1 à 5 pour cent en poids d'un agent anti-gouttes, de préférence un polytétrafluoréthylène encapsulé dans du poly(styrène-acrylonitrile) .

9. Tuyau d'eau selon l'une des revendications 1 à 8, dans lequel la composition comprend en outre 0,1 à 10 pour cent en poids d'une composition d'additifs, la composition d'additifs comprenant l'un parmi plusieurs de stabilisants, lubrifiants, auxiliaires de mise en œuvre, agents bloquant les UV, colorants, pigments, antioxydants, agents antistatiques, huile minérale et désactivateurs de métaux.

10. Tuyau d'eau selon la revendication 1, dans lequel la composition consiste en :
70 à 80 pour cent en poids du poly(phénylène éther) ;
10 à 14 pour cent en poids du copolymère à blocs hydrogénés d'un monomère alcénylaromatique et d'un diène conjugué ;
6 à 12 pour cent en poids d'un ester organophosphate ;
3 à 7 pour cent en poids du polystyrène bromé ;
0 à 1 pour cent en poids d'un polytétrafluoréthylène encapsulé dans du poly(styrène-acrylonitrile) ; et
0 à 5 pour cent en poids d'un stabilisant, lubrifiant, auxiliaire de mise en œuvre, agent bloquant les UV, colorant, pigment, antioxydant, agent antistatique, huile minérale et désactivateur de métaux.

11. Tuyau d'eau selon la revendication 10, dans lequel
le poly(phénylène éther) comprend un poly(2,6-diméthyl-1,4-phénylène éther) ayant une viscosité intrinsèque de 0,4 à 0,5 décilitre par gramme, déterminée à l'aide d'un viscosimètre Ubbelohde à 25 °C dans le chloroforme ;
le copolymère à blocs hydrogénés est un copolymère tribloc polystyrène-poly(éthylène-butylène)-polystyrène ayant une teneur en polystyrène de 25 à 35 pour cent en poids par rapport au poids du copolymère tribloc polystyrène-poly(éthylène-butylène)-polystyrène, et le copolymère tribloc polystyrène-poly(éthylène-butylène)-polystyrène ayant une masse moléculaire moyenne en masse de 240 000 à 300 000 grammes par mole, déterminée par chromatographie d'exclusion de taille utilisant des étalons de polystyrène ; et
l'ester organophosphate comprend le bis(diphénylphosphate) du bisphénol A.

12. Tuyau d'eau selon la revendication 1, dans lequel la composition consiste en :
70 à 80 pour cent en poids du poly(phénylène éther) ;
10 à 14 pour cent en poids du copolymère à blocs hydrogénés d'un monomère alcénylaromatique et d'un diène conjugué ;
6 à 10 pour cent en poids du phosphazène ;
3 à 7 pour cent en poids du polystyrène bromé ;
0 à 1 pour cent en poids d'un polytétrafluoréthylène encapsulé dans du poly(styrène-acrylonitrile) ; et
0 à 5 pour cent en poids d'un stabilisant, lubrifiant, auxiliaire de mise en œuvre, agent bloquant les UV, colorant, pigment, antioxydant, agent antistatique, huile minérale et désactivateur de métaux.

13. Tuyau d'eau selon la revendication 12, dans lequel
le poly(phénylène éther) comprend un poly(2,6-diméthyl-1,4-phénylène éther) ayant une viscosité intrinsèque de 0,4 à 0,5 décilitre par gramme, déterminée à l'aide d'un viscosimètre Ubbelohde à 25 °C dans le chloroforme ;
le copolymère à blocs hydrogénés est un copolymère tribloc polystyrène-poly(éthylène-butylène)-polystyrène ayant une teneur en polystyrène de 25 à 35 pour cent en poids par rapport au poids du copolymère tribloc polystyrène-poly(éthylène-butylène)-polystyrène, et le copolymère tribloc polystyrène-poly(éthylène-butylène)-polystyrène ayant une masse moléculaire moyenne en masse de 240 000 à 300 000 grammes par mole, déterminée par chromatographie d'exclusion de taille utilisant des étalons de polystyrène ; et
le phosphazène comprend un bis(phénoxy)phosphazène.

14. Procédé de fabrication du tuyau d'eau selon l'une quelconque des revendications 1 à 13, le procédé comprenant :
la formation d'une composition par mélange à l'état fondu de
60 à 85 pour cent en poids d'un poly(phénylène éther) ;
8 à 18 pour cent en poids d'un copolymère à blocs hydrogénés d'un monomère alcénylaromatique et d'un diène conjugué ;
5 à 15 pour cent en poids d'un ester organophosphate, d'un phosphazène ou d'une combinaison de ceux-ci ; et
2 à 10 pour cent en poids d'un polystyrène bromé ;
dans laquelle le pourcentage en poids de chaque composant est rapporté au poids total de la composition ; et
l'extrusion de la composition à travers une filière annulaire pour donner le tuyau d'eau comprenant la composition.
